# FASCICULE DE BREVET EUROPEEN

(11) **EP 1 029 445 B1**
(45) Date de publication et mention de la délivrance du brevet: **02.02.2005**
(21) Numéro de dépôt: 00470003.5
(22) Date de dépôt: 14.02.2000
(51) Int. Cl.: A01G 9/22, E04D 3/06

(54) **Dispositif modulable d'occultation de la lumière et de protection thermique par panneaux**
Modulare Beschattungs- und Thermoschutzeinrichtung bestehend aus Platten
Modular shading and thermal protection device consisting of panels

(30) Priorité: 15.02.1999 FR 9901897
(43) Date de publication de la demande: 23.08.2000
(73) Titulaire: Kamenoff, Daniel, 29000 Quimper (FR)
(72) Inventeur: Kamenoff, Daniel, 29000 Quimper (FR)
(74) Mandataire: Poupon, Michel

(56) Documents cités:
- EP-A- 0 612 895
- CH-A- 599 746
- FR-A- 2 668 537
- US-A- 4 928 450

## Description

La présente invention se rapporte au domaine des structures vitrées incluses dans des toitures et plus particulièrement aux systèmes d'occultation et d'isolation pour les structures vitrées incluses dans les toitures.

Le dispositif selon l'invention est un dispositif modulable d'occultation de la lumière et de protection thermique par panneaux sous des parties transparentes ou translucides d'une toiture et notamment d'une toiture de véranda.

Un dispositif d'occultation de la lumière et de protection thermique est un dispositif qui permet de masquer facilement et rapidement une partie transparente ou translucide d'une toiture en disposant sous ou sur cette partie, un cache qui empêche à la fois la lumière et la chaleur essentiellement solaires de la traverser dans un sens ou dans l'autre.

Ce dispositif est dit modulable lorsqu'il permet de masquer librement tout ou partie de la surface transparente ou translucide.

Ce dispositif a été conçu pour répondre à un besoin important de maîtrise de la lumière et de la chaleur procurées par les surfaces transparentes ou translucides disposées en toiture.

Il a été développé pour les toitures de véranda mais est applicable à tous les types de surfaces transparentes ou translucides disposées en toitures et notamment aussi, à toutes les fenêtres, car on rencontre en effet de plus en plus souvent de fenêtres disposées dans des toitures dîtes traditionnelles en ardoises, tuiles ou similaires, destinées à apporter de la lumière zénithale.

D'une manière générale, les aménagements transparents ou translucides pratiqués en toiture, qu'ils soient munis de moyens d'ouverture ou non, posent un problème important : la quantité de lumière qu'ils permettent de recevoir dessous est directement liée à la quantité de chaleur. Or, dans les régions tempérées, la lumière solaire et la chaleur solaire ne sont pas du tout uniformes tout au long de l'année. Par conséquent, lors de la conception de ces ouvertures, la surface des parties transparentes ou translucides est souvent calculée par rapport à l'ensoleillement pendant les saisons intermédiaires comme le printemps ou l'automne, et les pièces équipées de tels aménagements transparents ou translucides en toitures, voire les pièces adjacentes, sont souvent mal éclairées et mal chauffées en hiver et trop chauffées en été.

L'art antérieur connaît déjà des toitures de véranda munies de parties opaques isolantes. Par exemple, la demande de brevet français N° 2 732 387 porte sur une toiture de véranda comportant en sa partie supérieure une zone transparente et en sa partie inférieure une zone opaque isolante, mais le principal inconvénient de ce genre de dispositif réside dans le fait que les surfaces des parties respectivement transparentes d'une part et opaques d'autre part, ne sont pas modulables. De ce fait, la ou les pièces adjacentes à la véranda ne reçoivent pas suffisamment de lumière en hiver.

L'art antérieur connaît également la demande de brevet suisse N° 599 746 A qui présente une serre comportant, au-dessous de la surface du toit en pente, des feuilles ou des plaques réfléchissant le rayonnement lumineux et la chaleur, afin que l'intérieur soit au moins partiellement ombré. Une partie de ces éléments ombrant est fixe et l'autre est mobile entre une position ombrant en partie et une position ombrant complètement.

Le mouvement des parties mobiles ombrantes est assuré par un dispositif comportant un moteur, un arbre d'entraînement et au moins un câble, comme illustré à la figure 4 de ce document.

Les inconvénients de ce dispositif sont de deux ordres :
- d'une part les éléments réfléchissants sont mus par un système lourd et complexe à installer ;
- d'autre part ce système nécessite des interventions régulières d'entretien et de réparation, ce qui, bien évidemment, augmente d'une manière importante le coût de l'installation et le coût de l'utilisation du dispositif d'occultation de la lumière et de protection thermique.

En outre, ce dispositif est caractérisé en ce que la surface totale des parties ombrantes mobiles soit au moins égale à la surface totale des parties ombrantes fixes. Cela implique que la surface vitrée qui peut être libérée en plaçant les parties ombrantes mobiles sous les parties ombrantes fixes est égale au maximum à la moitié de la surface totale ombrante et que l'installation du dispositif ombrant diminue au minimum de moitié la luminosité et la chaleur sous la toiture par rapport à une structure sans dispositif ombrant.

La présente invention entend remédier aux inconvénients de l'art antérieur en proposant un dispositif d'occultation de la lumière et de protection thermique par panneaux mobiles dont la mobilité est assurée le plus simplement possible, par glissement du cadre des panneaux sur des ailes d'un profilé disposé sous la toiture, en tentant de réduire au maximum les contacts mécaniques resistifs entre les cadres et l'aile du profilé.

Un autre but important de l'invention réside dans le fait que le dispositif d'occultation engendre un surcoût raisonnable lors de l'installation et aucun surcoût particulier lors de l'utilisation.

Un autre but important de l'invention est de permettre le mouvement des panneaux d'occultation à l'aide d'un mécanisme léger et fiable dans le temps.

Un autre but important de l'invention est de permettre de n'occulter, en position ouverte, qu'un tiers, voire moins, de la surface du toit équipée du dispositif.

En effet, lorsque les contacts mécaniques resistifs entre les cadres et l'aile du profilé sont extrêmement réduits, l'énergie nécessaire pour bouger un panneau mobile est très faible et cette opération peut être aisément réalisée à la main, éventuellement à l'aide d'une canne si le ou les panneaux mobiles sont positionnés très hauts.

Pour ce faire, le dispositif propose notamment de réaliser les cadres des panneaux mobiles et au moins l'aile du profilé, en aluminium protégé à l'aide d'une couche de protection du type peinture laquée.

De plus, pour favoriser ce glissement, la présente invention propose d'interposer, entre ledit cadre et l'aile du profilé, des moyens de glissement du type, patins de tétrafluoroéthylène ou joncs agencés sur les ailes et sur les flancs des cadres.

Le profilé selon l'invention présente essentiellement deux variantes :
- une première variante dite « à coulisse simple » selon laquelle il permet grâce à une ou deux ailes situées de part et d'autre du corps central du profilé, le coulissement de un ou de deux panneaux indépendamment l'un de l'autre, et
- une deuxième variante dite « à coulisse double » selon laquelle il permet grâce à deux ou quatre ailes disposées superposées deux par deux de chaque côté du corps central du profilé, le coulissement de deux ou quatre panneaux indépendamment les uns des autres.

Cette deuxième variante permet de réaliser un dispositif comportant une surface ombrante composée de deux tiers de surface ombrante mobile et de un tiers de surface ombrante fixe.

Le dispositif selon l'invention permet également de choisir librement l'emplacement des parties opaques et des parties transparentes ou translucides situées dans la toiture de manière à ce que l'ouverture maximum du dispositif corresponde aux maximums de lumière et de chaleur désirées dans la pièce située sous la toiture, voire dans les pièces adjacentes, au moment où l'exposition est effectivement la plus forte.

Ainsi, il n'y a jamais trop de chaleur ni trop de lumière dans la pièce, véranda ou autre, située sous la toiture équipée du dispositif selon l'invention, ni au besoin dans les pièces adjacentes.

Le dispositif selon l'invention permet également d'opérer, au choix : la translation des panneaux selon une direction transversale à la pente ou selon la direction de la pente (la translation selon la direction de la pente n'a d'intérêt essentiellement que lorsque la translation perpendiculairement au sens de la pente n'est pas possible).

Le choix entre les différentes versions et variantes appartient essentiellement au commanditaire de l'ouvrage.

La présente invention présente en outre l'avantage important de pouvoir être montée sur un ouvrage déjà existant ou d'être montée en même temps que la toiture.

On comprendra mieux l'invention à l'aide de la description faite ci-après de l'invention à titre purement explicatif et non limitatif, en référence aux figures annexées dans lesquelles :
- la figure 1 illustre une vue en coupe du dispositif de protection solaire et thermique selon l'invention dans sa configuration à coulisse simple ;
- la figure 2 illustre une vue en coupe du dispositif de protection solaire et thermique selon l'invention dans sa configuration à coulisse double ;
- la figure 3 illustre une vue en coupe de la partie modulable d'une toiture de véranda équipée du dispositif d'occultation à simple coulisse selon l'invention, la toiture de la véranda comportant dans cette partie modulable, en sa partie basse un ou plusieurs panneaux isolants et en sa partie haute, du vitrage ;
- la figure 4 illustre une vue en coupe de la partie modulable d'une toiture de véranda équipée du dispositif d'occultation à simple coulisse selon l'invention, la toiture de la véranda comportant dans cette partie modulable, du vitrage du haut en bas de la toiture ;
- les figures 5, 6 et 8 illustrent des variantes du dispositif de la figure 3, vues de dessus ;
- les figures 7, 9 et 10 illustrent des variantes du dispositif de la figure 4, vues de dessus ;
- la figure 11 illustre une variante du dispositif de protection solaire et thermique à simple coulisse et à coulissement selon la direction de la pente, vue de dessus ;
- la figure 12 illustre une vue en coupe de la partie modulable d'une toiture de véranda équipée du dispositif d'occultation à double coulisse selon l'invention, la toiture de la véranda comportant dans cette partie modulable, en sa partie basse un ou plusieurs panneaux isolants et en sa partie haute, du vitrage ;
- la figure 13 illustre une vue en coupe de la partie modulable d'une toiture de véranda équipée du dispositif d'occultation à double coulisse selon l'invention, la toiture de la véranda comportant dans cette partie modulable, du vitrage du haut en bas de la toiture ;
- la figure 14 illustre une variante du dispositif de la figure 12, vue de dessus ;
- la figure 15 illustre une variante du dispositif de la figure 13, vue de dessus ;
- la figure 16 illustre une variante du dispositif de protection solaire et thermique à double coulisse et à coulissement selon la direction de la pente, vue de dessus ;
- la figure 17 illustre une vue en coupe d'un profil de simple et double coulisse selon l'invention ;
- la figure 18 illustre une vue en coupe du dispositif de protection solaire et thermique selon l'invention dans sa configuration à coulisse double et muni de moyens de glissement ; et,
- la figure 19 illustre une vue en coupe d'un autre profil de double coulisse selon l'invention.

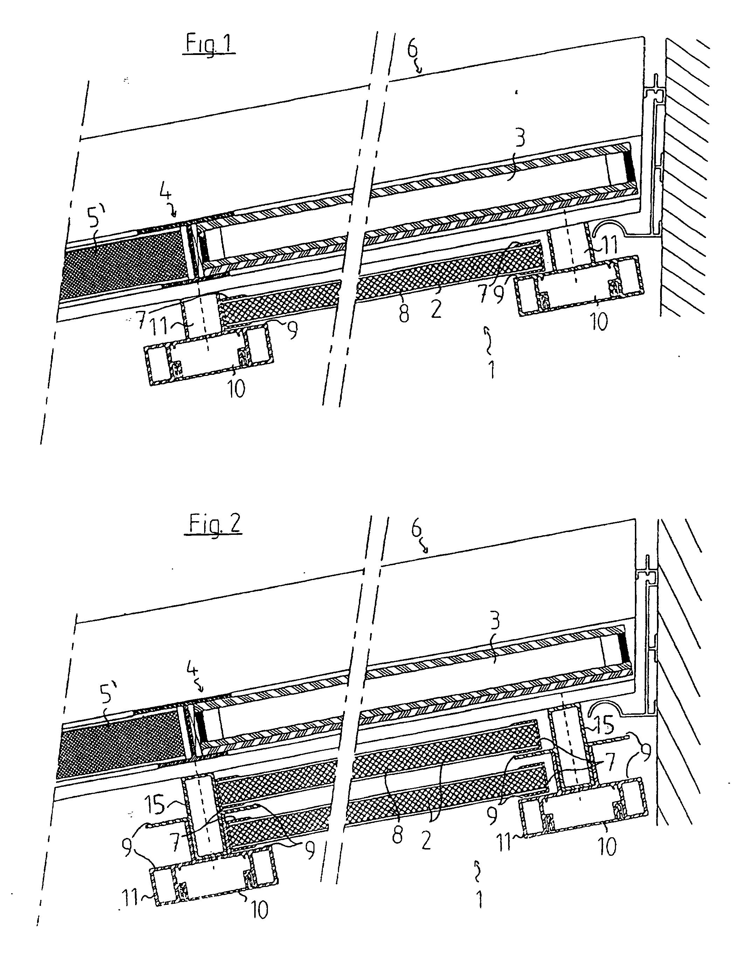

Le dispositif selon l'invention, illustré figure 1, est un dispositif (1) modulable d'occultation de la lumière et de protection thermique par un ou plusieurs panneaux (2) sous une ou plusieurs parties (3) transparentes ou translucides d'une toiture (4) comportant une ou plusieurs parties (5,5') opaques et notamment d'une toiture de véranda (6). Lesdits panneaux (2) sont constitués d'un cadre (7) et d'une partie centrale (8) rigide et coulissent parallèlement ou perpendiculairement à la direction de la pente de la toiture (4)

Le glissement du cadre (7) sur au moins une aile (9) d'un profilé (10) est un glissement sans absolument aucun roulement ; Il s'agit d'un contact entre deux matériaux qui est étudié de manière à engendrer le moins de frottements resistifs possible.

La partie centrale (8) rigide du panneau (2) est constituée par exemple d'une plaque en mousse synthétique recouverte d'une matière plastique.

Le profilé (10) est positionné sous la toiture (4) à la fois sous la partie (3) transparente ou translucide et sous la partie opaque (5).

Chaque panneau (2) possède ainsi deux positions extrêmes et une multitude de positions intermédiaires.

Les positions extrêmes sont constituées par :
- la position fermée dans laquelle le panneau (2) vient en totalité masquer une partie (3) translucide ou transparente de la toiture (4) et empêcher ainsi la lumière et la chaleur de pénétrer sous la toiture (4) ou de s'en échapper ;
- la position ouverte dans laquelle le panneau (2) est positionné en totalité sous une partie (5) opaque de la toiture (4) et permet ainsi à la lumière et la chaleur de pénétrer sous la toiture (4).

Les positions intermédiaires (2i) de chaque panneau (2) sont constituées par toutes les positions situées entre la position fermée et la position ouverte et elles permettent de masquer partiellement la partie (3) translucide ou transparente de la toiture (4) en faisant coulisser partiellement le ou les panneaux (2) sous la partie opaque (5) et permettre ainsi à une partie seulement de la lumière et de la chaleur de pénétrer sous la toiture (4) ou de s'en échapper. C'est ce qui constitue la modularité.

Dans une première version de l'invention, dite « à coulisse simple », le profilé (10) possède une ou deux ailes (9) situées de part et d'autre d'un profilé principal (11).

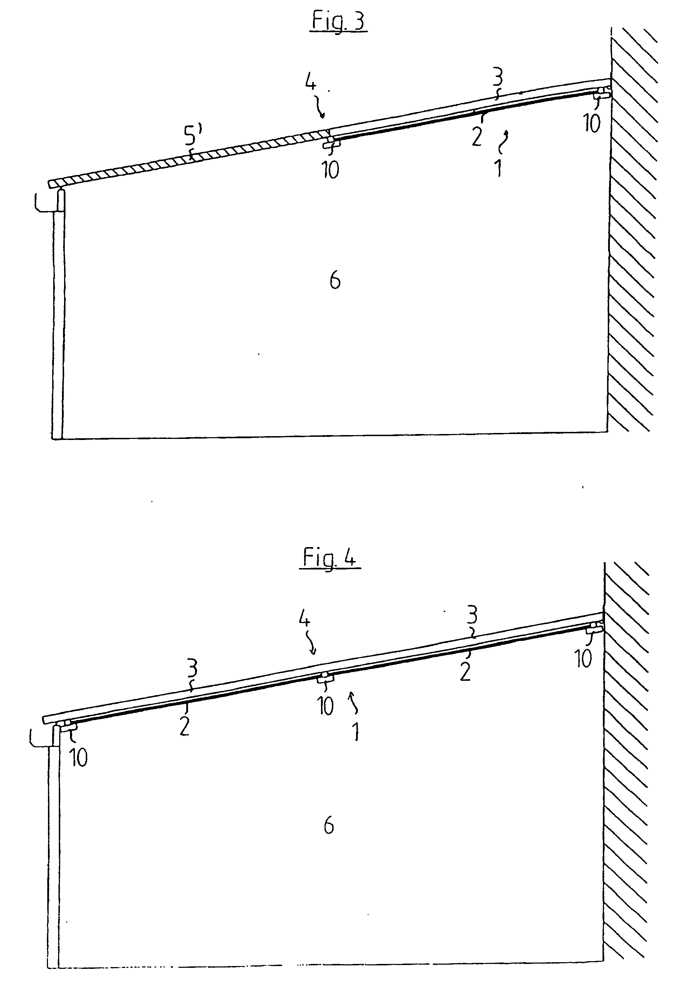

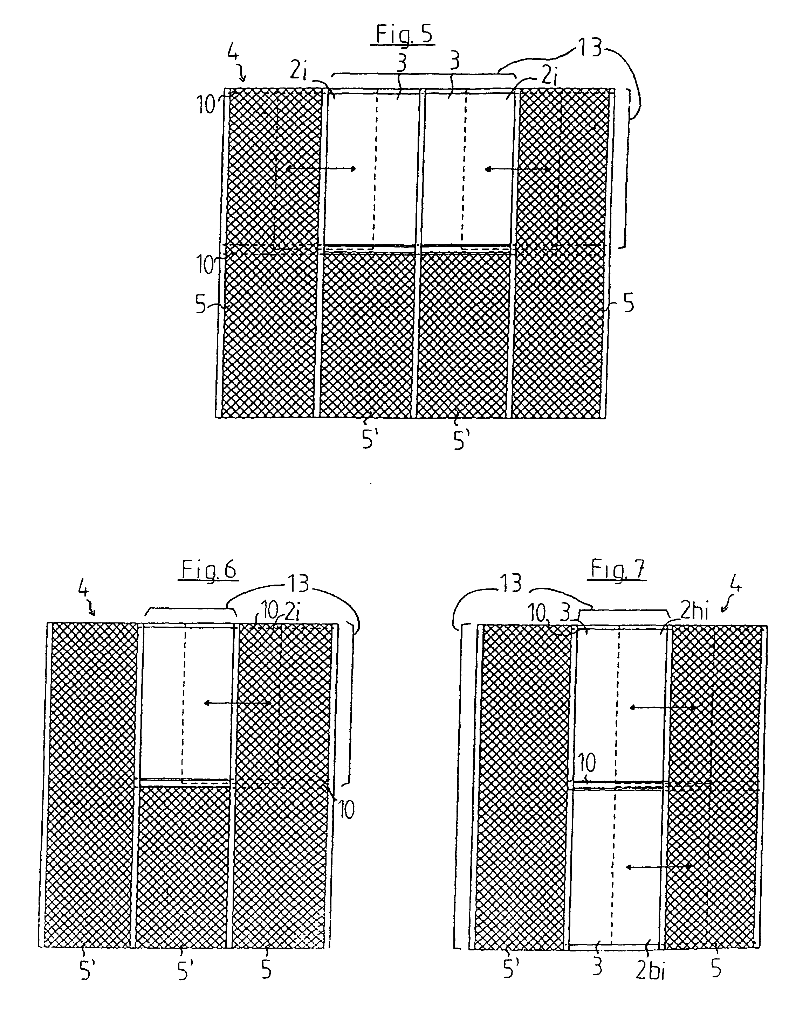

Dans la version à coulisse simple à coulissement transversalement au sens de la pente, chaque profilé (10) permet ainsi dans la partie modulable, le déplacement d'un panneau (2), comme illustré figure 3 ou de deux panneaux (2), comme illustré figure 4, sous la ou les parties opaques (5), selon que la toiture de la véranda comporte ou ne comporte pas en sa partie basse une ou plusieurs parties isolantes fixes (5').

Les figures 5 à 11 illustrent les différentes possibilités de modularité de cette première version à simple coulisse de l'invention.

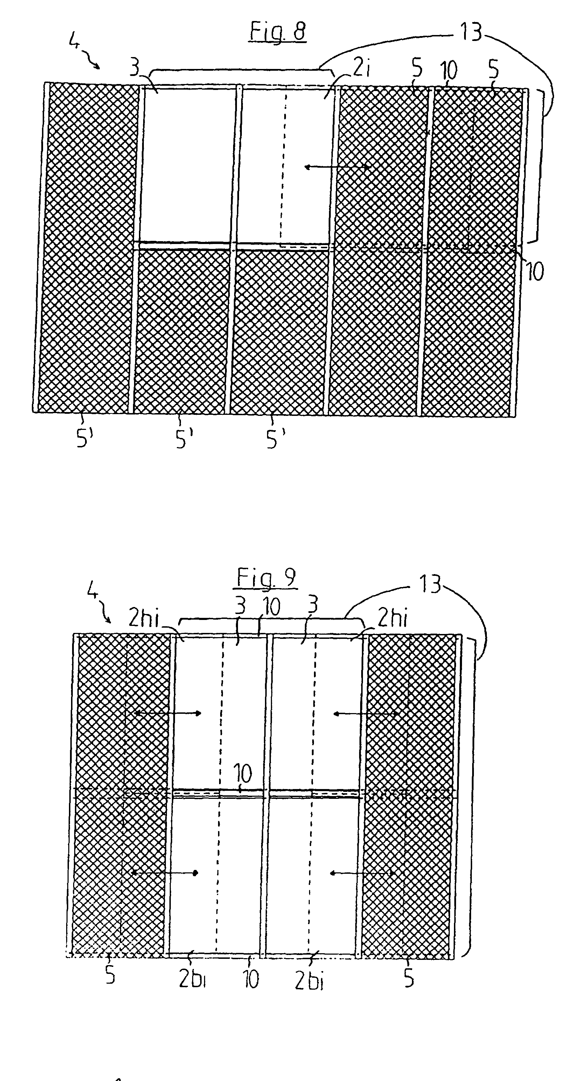

Dans la variante de l'invention illustrée figures 5, 6 et 8, la toiture (4) de la véranda comporte, en bas, une partie opaque (5') et en haut, dans sa partie modulable (13), une partie (3) translucide ou transparente et comporte en ses extrémités des parties opaques (5 et / ou 5'). Le profilé (10) est positionné sous la toiture de telle sorte qu'il permette aux panneaux (2) illustrés en positions intermédiaires (2i) de coulisser transversalement au sens de la pente, selon la direction des flèches, sous la partie haute de la partie opaque (5). Les variantes des figures 5 et 8 présentent une surface de partie (3) translucide ou transparente deux fois plus importante que la surface de partie (3) translucide ou transparente de la variante de la figure 6 et la variante de la figure 8 ne possède qu'un panneau (2) pour fermer ou ouvrir toute la partie (3) translucide ou transparente.

La plus grande modularité est bien sûr offerte par la variante de la figure 5, mais le choix entre les différentes variantes appartient essentiellement au commanditaire de l'ouvrage.

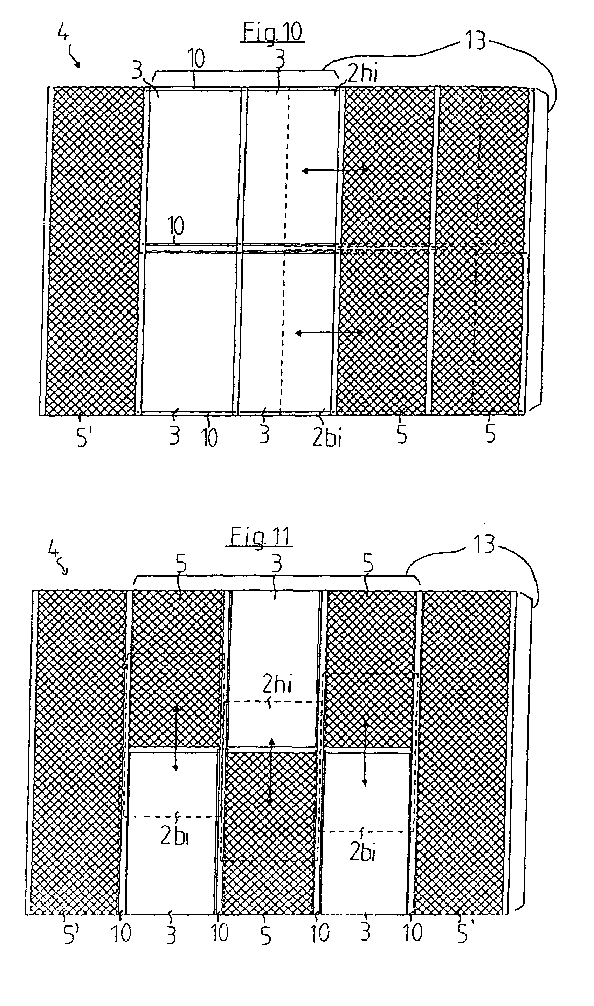

Dans la variante de l'invention illustrée figures 7, 9 et 10 la toiture (4) de la véranda comporte du haut en bas de la partie modulable (13), une partie (3) translucide ou transparente et comporte en ses extrémités des parties opaques (5 et / ou 5'). Le profilé (10) est positionné sous la toiture de telle sorte qu'il permette au(x) panneau(x) du haut illustré en position intermédiaire (2hi) et au(x) panneau(x) du bas illustré en position intermédiaire (2bi), de coulisser transversalement au sens de la pente, selon la direction des flèches, et indépendamment l'un de l'autre ou les uns des autres, sous la partie opaque (5). Les variantes des figures 9 et 10 présentent une surface de partie (3) translucide ou transparente deux fois plus importante que la surface de partie (3) translucide ou transparente de la variante de la figure 7 et la variante de la figure 10 ne possède que deux panneaux (2) pour fermer ou ouvrir toute la partie (3) translucide ou transparente : un panneau haut (2hi) et un panneau bas (2bi).

La plus grande modularité est bien sûr offerte par la variante de la figure 9, mais le choix entre les différentes variantes appartient essentiellement au commanditaire de l'ouvrage.

Dans la variante de l'invention illustrée figure 11, contrairement aux variantes illustrées figures 5 à 10, le coulissement des panneaux (2) ne se fait pas transversalement au sens de la pente, mais dans le sens de la pente. La toiture (4) de la véranda comporte en sa partie modulable (13), en bas, successivement, une partie (3) translucide ou transparente, une partie opaque (5) puis à nouveau, une partie (3) translucide ou transparente et en haut, successivement, une partie opaque (5), une partie (3) translucide ou transparente, puis à nouveau une partie opaque (5). La toiture (4) comporte, en outre, éventuellement en ses extrémités des parties opaques (5'). Les profilés (10) sont positionnés sous la toiture de telle sorte qu'ils permettent au panneau (2) du haut illustré en position intermédiaire (2hi) de coulisser selon le sens de la pente sous la partie opaque (5) basse et permettent aux panneaux (2) du bas illustrés en position intermédiaire (2bi), de coulisser selon le sens de la pente et indépendamment l'un de l'autre, sous les parties opaques (5) hautes. Les profilés (10) sont positionnés, de préférence, sous les chevrons de la toiture (4).

La modularité offerte est bien sûr différente, mais le choix entre les différentes variantes appartient essentiellement au commanditaire de l'ouvrage.

On constate dans cette première version de l'invention dite « à coulisse simple » que le dispositif ne permet d'obstruer ou de libérer qu'au maximum la moitié de la surface de la toiture (4), comme illustré figures 7 et 9.

Dans une deuxième version de l'invention, illustrée figures 2 et 12 à 16, ledit profilé (10) comporte au moins deux ailes (9) superposées, afin de permettre à au moins deux panneaux (2) de coulisser l'un au-dessus de l'autre et sur le profilé (10) et permettre ainsi d'obstruer ou de libérer d'une façon modulable la partie (3) translucide ou transparente qui peut représenter alors les deux tiers de la surface de la toiture (4).

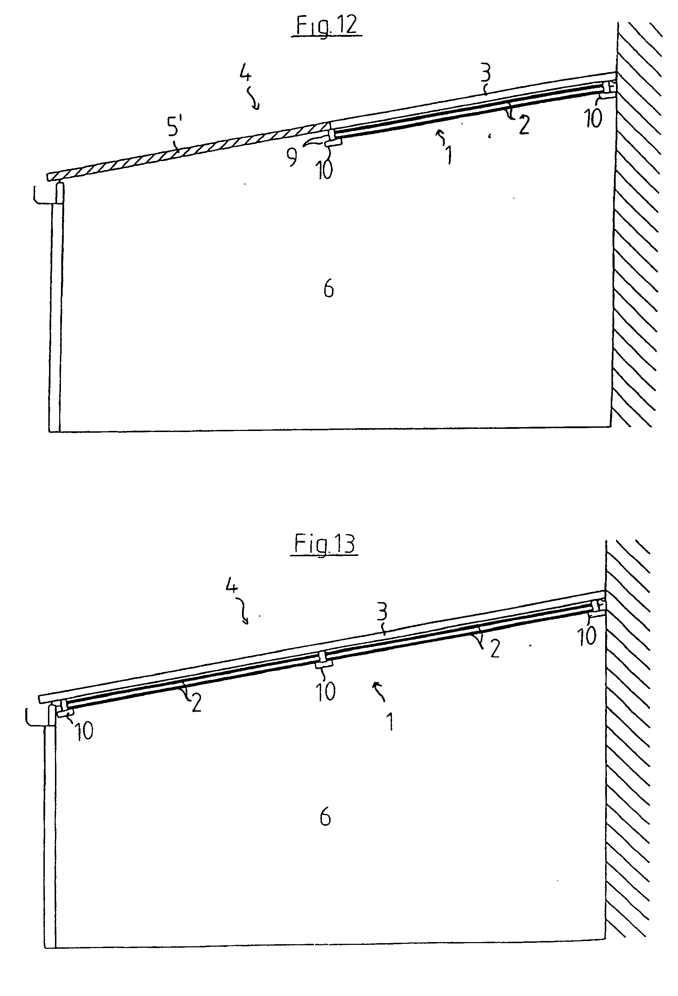

Dans la version à coulisse double, à coulissement transversalement au sens de la pente, chaque profilé (10) permet ainsi, dans la partie modulable, le déplacement de deux panneaux (2), comme illustré figure 12 ou de quatre panneaux (2), comme illustré figure 13, sous la ou les partie opaques (5) selon que la toiture de la véranda comporte ou ne comporte pas en sa partie basse une ou plusieurs parties isolantes fixes (5').

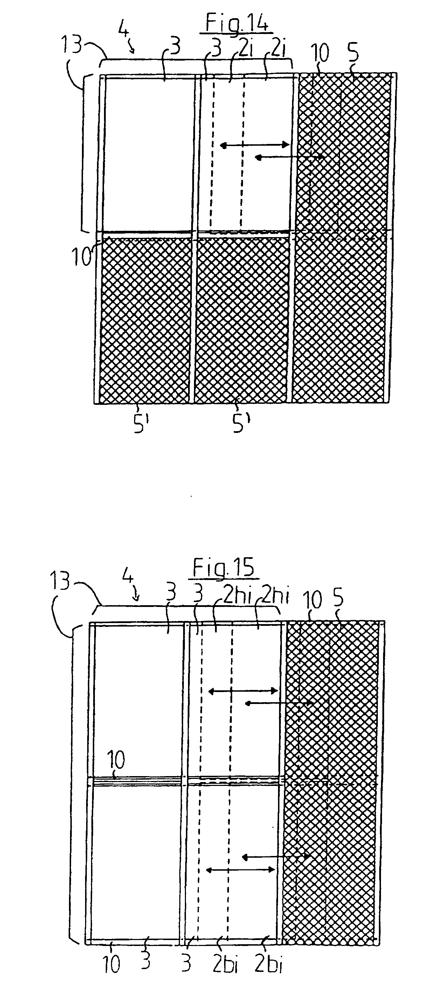

Les figures 14 à 16 illustrent les différentes possibilités de modularité de cette deuxième version à double coulisse de l'invention :

Dans la variante de l'invention illustrée figure 14 la toiture (4) de la véranda comporte, en bas, une partie opaque (5') et en haut, dans sa partie modulable (13), une partie (3) translucide ou transparente et comporte à une extrémité une partie opaque (5). Le profilé (10) est positionné sous la toiture de telle sorte qu'il permette aux panneaux (2) illustrés en positions intermédiaires (2i) de coulisser transversalement au sens de la pente, indépendamment l'un de l'autre, selon la direction des flèches, sous la partie haute de la partie opaque (5). On constate sur cette figure 14 que la surface de partie (3) translucide ou transparente est deux fois plus importante que la surface de la partie opaque (5) sous laquelle les panneaux (2) peuvent être placés.

Dans la variante de l'invention illustrée figure 15 la toiture (4) de la véranda comporte en sa partie modulable (13), en bas et en haut une partie (3) translucide ou transparente et comporte à une extrémité une partie opaque (5). Les profilés (10) sont positionnés sous la toiture de telle sorte qu'ils permettent aux panneaux du haut illustrés en positions intermédiaires (2hi) de coulisser, selon la direction des flèches, transversalement au sens de la pente et indépendamment l'un de l'autre, sous la partie haute de la partie opaque (5) et permettent aux panneaux du bas illustrés en positions intermédiaires (2bi), de coulisser, selon la direction des flèches, transversalement au sens de la pente et indépendamment l'un de l'autre, sous la partie basse de la partie opaque (5). On constate également sur cette figure 15 que la surface des parties (3) translucides ou transparentes est deux fois plus importante que la surface des parties opaques (5).

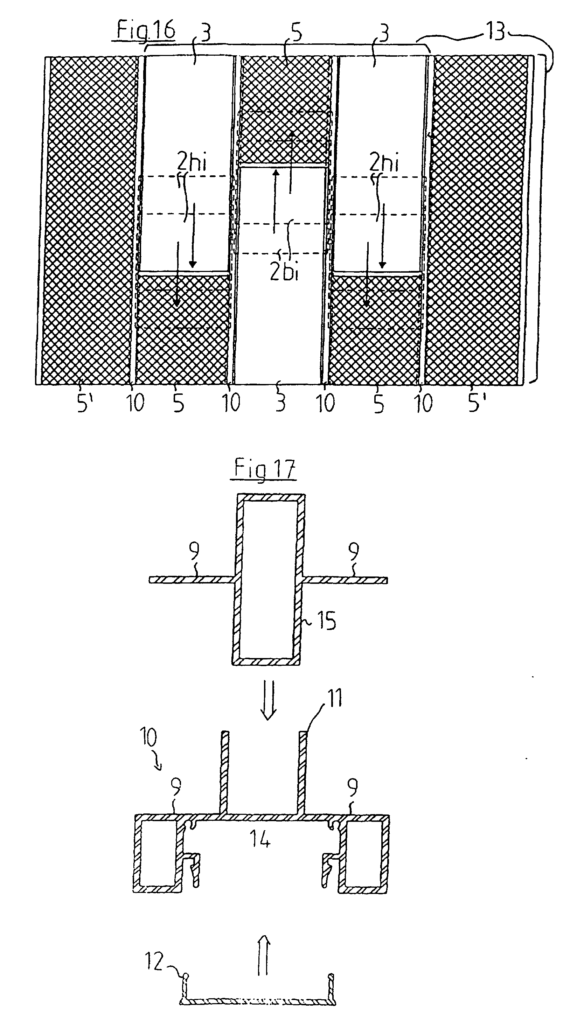

Dans la variante de l'invention illustrée figure 16, contrairement aux variantes illustrées figures 14 et 15, le coulissement des panneaux (2) ne se fait pas transversalement au sens de la pente, mais dans le sens de la pente. La toiture (4) de la véranda comporte en sa partie modulable (13), en haut, successivement, une partie (3) translucide ou transparente, une partie opaque (5) puis à nouveau, une partie (3) translucide ou transparente et en bas, successivement, une partie opaque (5), une partie (3) translucide ou transparente, puis à nouveau une partie opaque (5). La toiture (4) comporte, en outre, éventuellement, en ses extrémités des parties opaques (5'). Les profilés (10) sont positionnés sous la toiture de telle sorte qu'ils permettent aux panneaux (2) du haut illustrés en positions intermédiaires (2hi) de coulisser selon le sens de la pente sous les parties opaques (5) du bas, indépendamment les uns des autres et permettent aux panneaux (2) du bas illustrés en positions intermédiaires (2bi), de coulisser selon le sens de la pente et indépendamment l'un de l'autre, sous la partie opaque (5) du haut. Les profilés (10) sont positionnés, de préférence, sous les chevrons de la toiture (4). On constate également sur cette figure 16 que la surface des parties (3) translucides ou transparentes est deux fois plus importante que la surface des parties opaques (5) sous lesquelles les panneaux (2) peuvent être placés.

L'avantage de cette dernière variante réside dans le fait que l'agencement des panneaux permet à l'utilisateur de créer une zone ouverte à la lumière et à la chaleur au milieu de la toiture alors même que la partie basse et la partie haute de cette toiture sont fermées, soit par un panneau (2), soit par une partie opaque (5).

La modularité offerte entre les différentes variantes des figures 14, 15 et 16 est bien sûr différente, mais le choix entre les différentes variantes appartient essentiellement au commanditaire de l'ouvrage.

Dans la version à double coulisse, ledit profilé (10) comporte au moins deux ailes (9) superposées. Il peut en réalité comporter trois ailes (9) superposées, voire plus encore, afin de permettre d'obstruer ou de libérer les trois quarts, voire plus, de la surface de la partie modulaire (13) de la toiture (4).

Selon l'invention, ledit ou lesdits panneaux (2) peuvent être opaques ou translucides selon que l'on choisit d'empêcher complètement la lumière et la chaleur de pénétrer lorsque les panneaux sont en position fermée ou selon que l'on choisit de filtrer la lumière et la chaleur.

Les panneaux opaques peuvent comporter sur leurs surfaces supérieures une couche réfléchissante afin d'augmenter encore l'effet isolant.

Les schémas des figures 5 à 11 et 14 à 16 ne sont donnés qu'à titre purement explicatif et nullement limitatif afin d'illustrer une partie des possibilités de configuration des toitures ainsi équipée du dispositif. En particulier, les positions des parties opaques (5'), sous lesquelles aucun panneau (2) ne vient se positionner, peuvent varier car elles n'ont pas d'effet technique selon la présente invention.

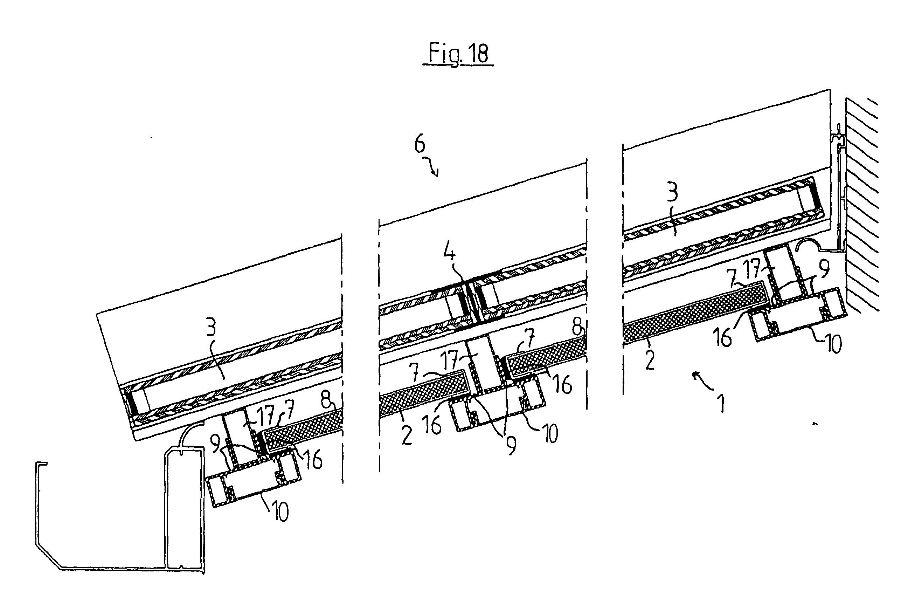

Dans une version préférée de l'invention, illustrée figure 17, le profilé (10) est réalisé selon une structure géométrique très simple, et le profilé de base est identique pour les versions à coulisse simple et les versions à coulisse double.

Le profilé (10) comporte un profilé principal (11), de base, de chaque côté duquel sont disposés deux ailes (9), et qui est obstrué en son extrémité par un manchon (12).

Le manchon (12) est monté de telle sorte qu'il puisse être désolidariser du profilé principal (11) et permettre ainsi d'accéder à un espace (14) courant tout le long du profilé, dans lequel peuvent être disposés, par exemple, des fils d'alimentation électrique. Cet agencement présente ainsi l'avantage de permettre de camoufler complètement les fils d'alimentation des suspensions destinées à l'éclairage de la pièce.

Dans cette version préférée, le profilé de double coulisse est obtenu simplement en fixant au profilé principal (11) un profilé secondaire (15) présentant deux ailes (9), une de chaque côté du profilé secondaire (15).

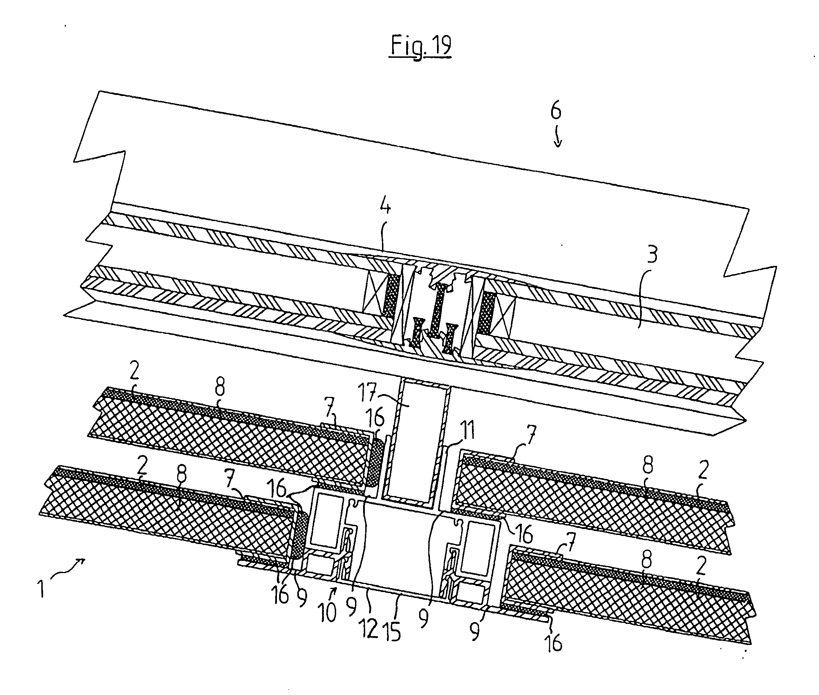

Ledit profilé secondaire (15) peut être positionné sur le profilé principal (11), comme illustrée figure 17, mais il peut également être positionné sous le profilé principal (11), comme illustrée figure 19.

L'avantage de cette dernière version réside essentiellement dans le fait qu'elle permet de réduire l'encombrement du dispositif selon son épaisseur.

Il apparaît à l'usage que lorsque le dispositif (1) selon l'invention est en position complètement fermée, la température de l'air situé entre les panneaux (2) et la toiture (4) augmente fortement. Cette température dépend bien sûr de l'ensoleillement, mais également, d'une manière plus générale, du climat du lieu d'implantation.

Une solution consiste à créer une circulation d'air dans l'espace situé entre les panneaux (2) et la toiture (4), mais pour réduire l'encombrement du dispositif (1), il est préférable de positionner les panneaux (2) le plus près possible de la toiture (4).

Pour cela, un profilé intermédiaire (17) présentant une hauteur variable en fonction du climat du lieu d'implantation est positionné entre le profilé (10) et la toiture (4), comme illustré figures 18 et 19.

La hauteur du profilé intermédiaire (17) est, par exemple, de l'ordre de 30 à 40 millimètres.

Un aspect important de l'invention réside dans le fait que le mouvement des panneaux sur le profilé est extrêmement simple puisqu'il est basé sur un glissement sans quasiment aucun frottement.

Pour permettre le déplacement de ces panneaux, on peut munir chaque panneau d'une ou de plusieurs poignées que l'on peut par exemple encastrer à l'extrémité des panneaux. Ainsi, à l'aide d'une canne, il est aisé de manoeuvrer les panneaux verticalement ou horizontalement.

Il est également possible de munir le dispositif, d'un équipement motorisé chargé de provoquer la translation des panneaux à l'aide par exemple d'un système de crémaillère. Une telle adaptation est à la portée de l'homme de l'art.

## Revendications

1. Dispositif (1) modulable d'occultation de la lumière et de protection thermique par un ou plusieurs panneaux (2) sous une ou plusieurs parties (3) transparentes ou translucides d'une toiture (4) de véranda (6) comportant une ou plusieurs parties (5,5') opaques, ledit ou lesdits panneaux (2) étant constitués d'un cadre (7) et d'une partie centrale (8) rigide et coulissant parallèlement ou perpendiculairement à la direction de la pente de la toiture (4), **caractérisé en ce qu'**il est constitué de profilés (10) positionnés sous les chevrons de la toiture (4), chaque profilé (10) comportant un profilé principal (11) muni d'au moins une aile (9) et des moyens de glissement (16), du type patins en tétrafluoroéthylène ou joncs, agencés sur ladite aile et sur le flanc du cadre (7) reposant sur les ailes (9) desdits profilés (10) et **en ce que** chaque panneau comporte au moins une poignée, de préférence, encastrée à l'extrémité du panneau (2) permettant ainsi le coulissement, à l'aide d'une canne, des panneaux (2) par glissement.

2. Dispositif (1) modulable d'occultation de la lumière et de protection thermique selon la revendication 1, **caractérisé en ce que** chaque profilé (10) comporte un espace (14) courant tout le long du profilé apte à être obstrué par un profilé (12).

3. Dispositif (1) modulable d'occultation de la lumière et de protection thermique selon la revendication 1 ou 2, **caractérisé en ce que** ledit profilé (10) comporte au moins deux ailes (9) superposées.

4. Dispositif (1) modulable d'occultation de la lumière et de protection thermique selon la revendication 1 ou 2, **caractérisé en ce qu'**un profilé secondaire (15) présentant deux ailes, une de chaque côté du dit profilé (15) et des moyens de glissement agencés sur lesdites ailes, est positionné soit au-dessus, soit au-dessous du profilé principal (11).

5. Dispositif (1) modulable d'occultation de la lumière et de protection thermique selon l'une quelconque des revendications 1 à 4, **caractérisé en ce qu'**un profilé intermédiaire (17) présentant une hauteur variable est positionné entre le profilé (10) et la toiture (4) assurant ainsi une circulation d'air entre l'espace situé entre les panneaux (2) et la toiture (4).

6. Dispositif (1) modulable d'occultation de la lumière et de protection thermique selon la revendication 5, **caractérisé en ce que** la hauteur du profilé intermédiaire (17) est de l'ordre de 30 à 40 millimètres.

## Patentansprüche

1. Modulare Beschattungs- und Wärmeschutzvorrichtung (1) mittels einer oder mehrerer Platten (2) unter einem oder mehreren transparenten oder durchscheinenden Teilen (3) einer Überdachung (4) einer Veranda (6), die ein oder mehrere lichtundurchlässige Teile (5, 5') aufweist, wobei die Platten (2) aus einem Rahmen (7) und einem steifen Mittelteil (8) aufgebaut sind sowie parallel oder rechtwinklig zu der Neigungsrichtung der Überdachung (4) verschiebbar sind, **dadurch gekennzeichnet, dass** sie aus Profilen (10) aufgebaut ist, die unterhalb der Sparren der Überdachung (4) angeordnet sind, wobei jedes Profil (10) ein Hauptprofil (11) aufweist, das mit wenigstens einem Flügel (9) und Gleitmitteln (16) nach Art von Gleitschuhen aus Tetrafluorethylen oder Ringen ausgestattet ist, die an dem Flügel und an der auf den Flügel (9) des Profiles (10) ruhenden Flanke des Rahmens (7) angefügt sind, und dass jede Platte wenigstens ein Griffstück aufweist, das vorzugsweise am Rand der Platte (2) angebracht ist und damit das Gleiten der Platten (2) durch Verschieben mit Hilfe eines Stabes gestattet.

2. Modulare Beschattungs- und Wärmeschutzvorrichtung (1) nach Anspruch 1, **dadurch gekennzeichnet, dass** jedes Profil (10) einen Freibereich (14) aufweist, der über die gesamte Länge des Profiles verläuft und dazu eingerichtet ist, durch ein Profil (12) verschlossen zu werden.

3. Modulare Beschattungs- und Wärmeschutzvorrichtung (1) nach Anspruch 1 oder 2, **dadurch gekennzeichnet, dass** das Profil (10) wenigstens zwei übereinander angeordnete Flügel (9) aufweist.

4. Modulare Beschattungs- und Wärmeschutzvorrichtung (1) nach Anspruch 1 oder 2, **dadurch gekennzeichnet, dass** ein weiteres Profil (15), das zwei Flügel aufweist, von denen jeder auf einer Seite des Profiles (15) angeordnet ist, und das über an den Flügeln angebrachte Verschiebemittel verfügt, entweder oberhalb oder unterhalb des Hauptprofiles (11) angeordnet ist.

5. Modulare Beschattungs- und Wärmeschutzvorrichtung (1) nach einem der Ansprüche 1 bis 4, **dadurch gekennzeichnet, dass** ein eine variable Höhe aufweisendes Zwischenprofil (17) zwischen dem Profil (10) und der Überdachung (4) angeordnet ist und damit eine Luftzirkulation in dem zwischen den Platten (2) und der Überdachung (4) gelegenen Raum sicherstellt.

6. Modulare Beschattungs- und Wärmeschutzvorrichtung (1) nach Anspruch 5, **dadurch gekennzeichnet, dass** die Höhe des Zwischenprofiles (17) im Bereich von 30 bis 40 Millimeter liegt.

## Claims

1. Modular apparatus (1) for shading and thermal protection by means of one or a plurality of panels (2) beneath one or a plurality of transparent or translucent portions (3) of a roof (4) of a veranda (6) including one or a plurality of opaque portions (5, 5'), said panel or panels (2) comprising a frame (7) and a central rigid portion (8) and sliding parallel or perpendicularly to the direction of the slope of the roof (4), **characterised in that** it comprises profiles (10) positioned beneath the rafters of the roof (4), each profile (10) including a principal profile (11) provided with at least one flange (9) and sliding means (16), of the type consisting of tetrafluoroethylene runners or trims, disposed on said flange and on the flank of the frame (7) resting on the flanges (9) of said profiles (10), and **in that** each panel preferably includes at least one handle, which is fitted on the end of the panel (2) and thus permits the sliding, by means of a stick, of the panels (2) by gliding.

2. Modular shading and thermal protection apparatus (1) according to claim 1, **characterised in that** each profile (10) includes an area (14) which runs throughout the length of the profile and is capable of being blocked by a profile (12).

3. Modular shading and thermal protection apparatus (1) according to claim 1 or 2, **characterised in that** said profile (10) includes at least two superposed flanges (9).

4. Modular shading and thermal protection apparatus (1) according to claim 1 or 2, **characterised in that** a secondary profile (15), which has two flanges, one on each side of said profile (15), and gliding means disposed on said flanges, is positioned either above or below the principal profile (11).

5. Modular shading and thermal protection apparatus (1) according to any of claims 1 to 4, **characterised in that** an intermediate profile (17), having a variable height, is positioned between the profile (10) and the roof (4), thereby ensuring a circulation of air between the area situated between the panels (2) and the roof (4).

6. Modular shading and thermal protection apparatus (1) according to claim 5, **characterised in that** the height of the intermediate profile (17) is of the order of 30 to 40 millimetres.
